# EUROPEAN PATENT APPLICATION

(11) **EP 1 528 078 A1**
(43) Date of publication of application: **04.05.2005**
(21) Application number: 03025079.9
(22) Date of filing: 03.11.2003
(51) Int. Cl.: C08J 3/18, B29B 7/30

(54) **A process for making plastisol compositions**

(71) Applicant: Henkel KGaA, 40190 Düsseldorf (DE)
(72) Inventor: Vidal Codina, Humberto, 08170 Montornes des Valles (Barcelona) (ES)

(57) **Abstract**

The present invention relates to a (semi-) continuous method for making plastisol compositions comprising the steps of delivering into a blender a metered amount of polymer powder(s), filler(s), other constituents in powder form and liquid constituents, blending the mixture at low shear, recirculating said mixture with a pump through a dynamic mixer back into the blending tank, optionally degassing the plastisol composition discharging the composition into storage containers. This method results in plastisols with superior rheological properties within narrowly defined viscosity and yield point ranges without maturing stages.

## Description

The present invention relates to a method for making plastisol compositions and an apparatus suitable for carrying out said process.

Plastisols are generally understood to be dispersions of organic polymers in high boiling organic liquids, normally referred as plasticizers. In the sol state, the finely divided polymer powder and optionally other finely divided solid materials are dispersed in the liquid plasticizer forming a paste. On heating this dispersion to temperatures above 100°C, the polymer powder becomes soluble in the plasticizer, thus forming a highly viscous gel which remains irreversibly gelled and this hardens on cooling to room temperature. The originally two phase dispersion is transformed into a single phase system through the swelling and solubilization of the polymer powder in the plasticizer, whereby the polar groups of the plasticizer molecules are attached to the polar groups of the polymer chain, thus forming the single phase of the polymer solvated by the plasticizer.

By far the majority of plastisols used today are based on polyvinyl chloride (PVC) or copolymers of vinylchloride with vinylacetate. The liquid plasticizers are either C₄- to C₁₈- alkyl, aryl or alkyl/aryl esters of phthalic acid, trimellitic acid or C₄- to C₈-alkyldicarboxylic acids. However, also organic phosphates or phenolic esters of alkylsulfonic acids are known to be used as plasticizers. Beside PVC- homo- and copolymers, it is known to use specific (meth)acrylate homo- or copolymers or specific styrene copolymer powders for making plastisols.

Plastisols have found wide spread industrial application inter alia as sealing compounds, for example for seam sealing of metal containers or as seam sealing compounds or adhesives in other metal industries. In particular, they are used widely as corrosion-inhibiting coatings for metals, for example as underbody coatings for motor vehicles, as adhesives or seam sealers in automotive body-construction. Other applications include impregnating and coating of substrates of textile materials, cable insulations, etc.

Typically, plastisols especially PVC-plastisols are produced in batch processes using high shear mixing equipment, for example dissolvers, planetary mixers, banbury mixers, kneaders, extruders or double Z-blenders.

Continuous or semi- continuous mixing processes for making plastisols have also been disclosed, see for example G. Garbagnati, "Advances in continuous processing of thermoplastics and plastisols/organosols", Plast, 1988, 19(1), page 53 to 55 discloses a process using a flash homogenizer for making plastisols which, according to this reference, makes it possible to obtain a ready-to use plastisol of any viscosity.

Jack W. Webb discloses in "A Guide to making PVC foam plastisols without blowing agents", SPE Journal, February 1971-Vol. 27, page 43, the use of an oakes continuous mixer. In this process, the vinyl plastisol is delivered to the mixing head at a constant rate by a positive-displacement, variable-speed pump. Simultaneously air is passed through a pressure regulating valve and rotometer and introduced into the plastisol stream through an air check valve.

SU 1087344 A discloses a process comprising the mixing of paste-forming PVC with a plasticizer and stabiliser then extruding and granulating the mixture.

JP 58151231 teaches a process comprising mixing a polyvinyl chloride powder and a plasticizer forming a sol or slurry and feeding the sol or slurry to an extruder and extruding this mixture continuously to form ultra soft PVC articles.

While these processes can be used for making PVC-plastisols which are immediately further processed to make the final gel from the plastisol, it is desirable to have a continuous or semi-continuous process available for making plastisols to be stored or shipped prior to further processing. Particularly in automotive applications, where such plastisols are being used for underbody coatings, seam sealers and adhesives applications. Today these paste type plastisols are applied frequently in spray application by robotic or otherwise fully automated application devices. It is essential for a reliable application, that the rheological properties, especially the viscosity and the yield point, remain constant within a very narrow range over a long storage time and temperature range. Also, there is a need for making such plastisol in bulk quantities to be shipped in tank cars and stored in bulk tanks without changing the rheological properties. Hitherto, this was only possible by making small batches in high shear dispersing equipment and blending several of these batches in a large blending tank, allowing the final plastisol blend to "mature", i.e. develop its plateau level of the rheological properties. Large volume, high shear mixing equipment was hitherto not suitable for producing storage-stable plastisol compositions because of the high friction level of the mixing elements in the plastisol resulting in high local temperature increase, which results in pour viscosity stability of the plastisol on storage.

There is a need for an improved process for making storage stable pasty plastisol compositions in high volumes at reasonable costs.

According to the present invention, this problem is solved by a process from producing plastisol compositions which comprises the following essential steps:
(a) delivering into a blender a metered amount of polymer powder(s), filler(s), other constituents in powder form and liquid constituents,
(b) blending the mixture at low shear,
(c) recirculating said mixture with a pump through a dynamic mixer back into the blending tank,
(d) degassing the plastisol composition
(e) discharging the composition into storage containers.

A second embodiment of the present invention relates to an apparatus for making uncured plastisol compositions comprising:
(a) A blending tank (1) equipped with low shear mixing means (2) and metering means for charging powdery and liquid components of the plastisol composition to said tank,
(b) pumping means (3) operatively connected to said blending tank (1),
(c) a dynamic mixer (4),
(d) a manifold (6) and
(e) backflow means (5) to blending tank (1) for recirculating the composition from blending tank (1) through dynamic mixer (4) back into blending tank (1)
(f) product discharge means (7) and
(g) optionally a filtration device.

The powdery ingredients of the composition like the polymer powders, fillers, pigments and other constituents or auxiliaries in powder form can be conveyed and metered by conventional conveying and weighing equipment or hoppers in to the blending tank. The liquid constituents like plasticizers, extender liquids, optionally liquid or high viscous adhesion promoters or auxiliary curing aids are metered in to the blending tank with conventional metering pumps like gear pumps or positive displacement pumps. In the blending tank, the mixture is blended with low shear. Typically, the blending tank is a conventional stirred tank reactor equipped with low shear blending means such as anchor stirrer, propeller, impeller, beam agitator or combinations thereof. Optionally, the blending tank can be jacketed, whereby water or an other liquid is circulated through the jacket, allowing for temperature control of the stirred tank.

The stirred tank is connected to a dynamic mixer of such a way, that the "pre-homogenized" plastisol mixture is recirculated through the dynamic mixture back in to the blending tank. In the preferred mode, the recirculation of the plastisol through the dynamic mixture is at least to 2 to 4 times, optionally up to 10 times prior to discharging the final product in to the storage containers or transportation containers such as tank trucks, for delivery to a customer plant.

In a preferred embodiment of the invention, the plastisol is degassed from the entrapped air or other gases and pumped through an filtration device for separation from coarse agglomerates before the plastisol is discharged in to the storage or transportation containers.

Also, in a preferred embodiment, the dynamic mixer is equipped with means for providing successive alternating radial flow and linear flow of the plastisol composition through the dynamic mixer.
In an especially preferred embodiment, this is achieved by a combination of turbines as means for providing radial flow and drilled plates separating the turbines providing for linear flow through the holes of the drilled plates. Also, the dynamic mixer is equipped with sufficient cooling devices allowing for rigid temperature control of the plastisol composition passing through the dynamic mixing device. In a preferred embodiment, the temperature is controlled by an electronic controlling device in a such a way, that the temperature of the plastisol is kept with in a range of 1 °C to 10°C, preferably within the range of 1 °C to 2°C. This avoids the overheating of the plastisol composition, said overheating would result in lack of rheological stability on storage and transportation.

In preferred embodiment, the dynamic mixer comprises 3 turbines separated by two drilled plates, however it is also possible to have up to 5 or 6 turbines separated by 4 to 5 drilled plates.

The basic principles of the process according to this invention are further illustrated by the accompanying drawings.

**Figure 1** is a diagram illustrating the configuration of the apparatus of the present invention.

**Figure 2** is a block diagram illustrating the sequence of flow in the dynamic mixer.

**Figure 3** is a diagram illustrating the flow through the mixing elements of the dynamic mixer.

**Figure 4** is a cut-view of the dynamic mixer.

**Figure 5** is a detailed view of the mixing elements of the dynamic mixer.

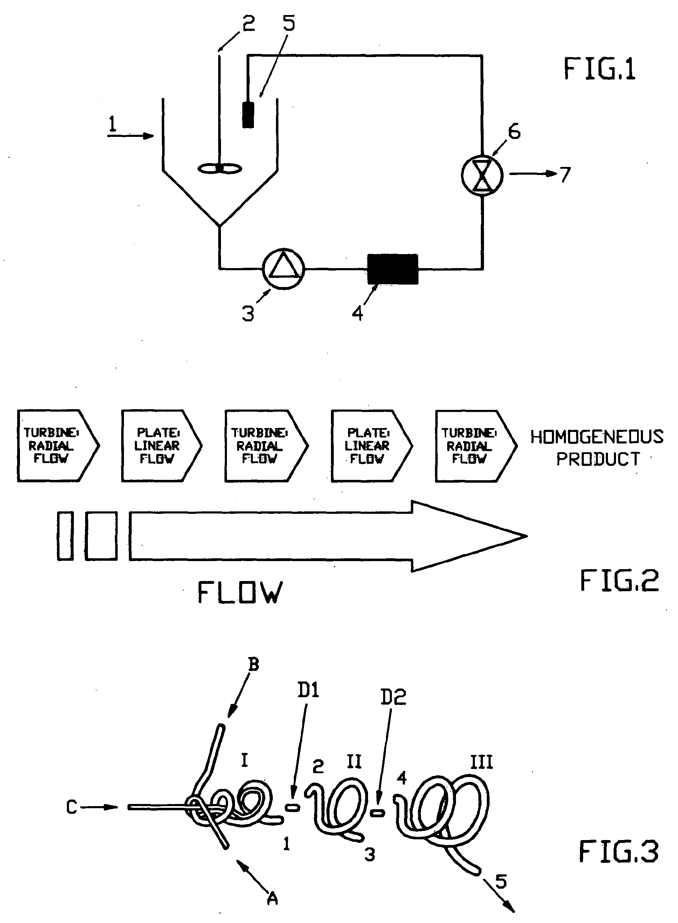

Referring now to **Figure 1**, the blending tank (1) used in the manufacturing process for the semi-continuous manufacturing of plastisols is shown schematically. The blending tank (1) is equipped with a low shear, slowly rotating stirrer (2) which can be an anchor, a propeller, an impeller, a beam agitator or a combination of these stirring devices. The blending tank (1) is connected via a pipe and a pump (3) with the dynamic mixer (4) and a manifold (6) which allows to switch the product stream either back to the inlet (5) of the blending tank (1) or to the discharge device (7) which includes optionally a filtration the device (not shown). According to a preferred embodiment of the manufacturing process according to the present invention, the product is recirculated from the blending tank (1) through the dynamic mixer (4) at least 2 to 4 times prior to discharging, however, the product may be recirculated up to 10 times.

The block diagram of **Figure 2** shows the alternating radial flow followed by linear flow until the plastisol composition is eventually homogenized and the aggregates of the polymer powder have been finely dispersed in a controlled mode.

In the normal embodiment, all ingredients of the plastisol composition are charged to the blending tank (1) and are then pumped in to inlet (A) of the dynamic mixer (**Figure 3**). However, it is possible to charge additional components directly in to the inlets (B) and (C) of the aspirator section (I) which is also the first turbine of the dynamic mixer. The sequences of drilled plates separating the individual turbines I, (II) and (III) are shown in **Figure 3** in a schematic manner. In this figure, at points (1) and (3) the flow of the mixture of the product to be homogenized changes from turbulent flow in the turbines (I) and (II) to laminar flow in the drilled plates (D1) and (D2). At points (2) and (4) flow changes again from linear flow to turbulent flow in turbines (II) and (III). Point (5) designates the exit point from turbine (III).

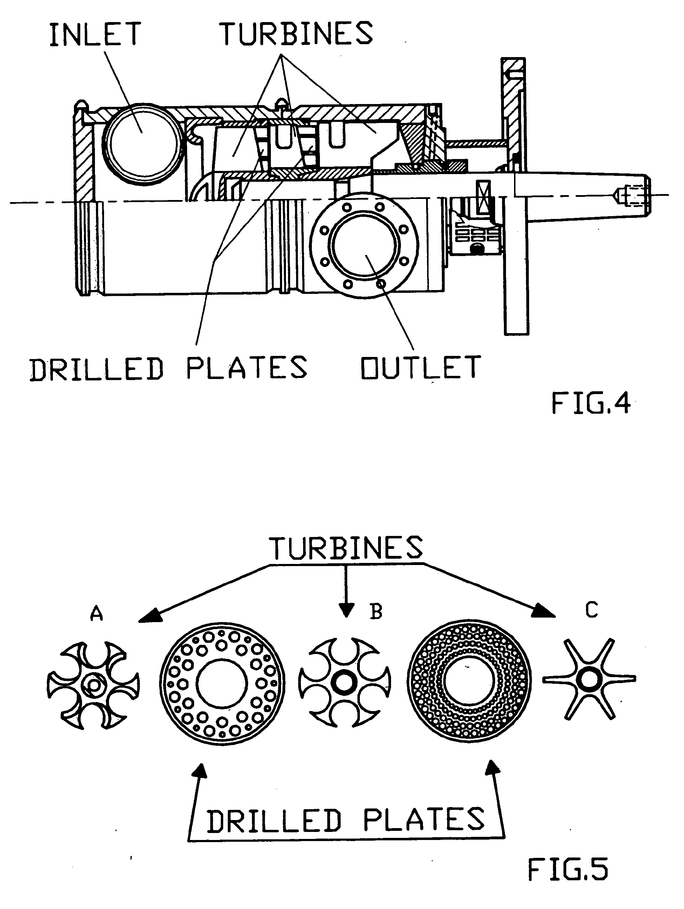

**Figure 4** shows a crosscut-view of the dynamic mixer including the inlet section, the turbines, the drilled plates and the driving shaft for the turbines as well as the outlet section of the mixer. The cooling means for the dynamic mixer are not shown in detail.

**Figure 5** is a view of the details of the mixing elements of the dynamic mixer showing the turbines and the drilled plates. The individual turbines are preferably shaped vane wheels. The vanes or blades of the individual turbine wheels may differ from one another in shape and size, also the diameter of the holes in the drilled plates may vary from wide to narrow in the direction of the flow of the composition. The vanes of the first turbine A cover a larger segment of the full circle than those of turbine B and the vanes of turbine C (last in the flow direction) has the smallest vanes. The central hole of the turbine will serve to receive the drive shaft for the turbine (not shown). Also, the drilled holes in the plate separating turbines A and B are larger and diameter than the holes in the drilled plate separating turbine B and C. The central hole of a drilled plate will receive the bearing the drive shaft (not shown ) driving the turbines.

The process according to the present invention produces plastisols with a better and more constant control of the dispersion of the agglomerates of the polymer powder in the plasticizer without generating excessive heat in the product. This results in superior rheological properties within narrowly defined viscosity and yield point ranges without maturing stages and/or blending of several batches for uniform production of large bulk quantities of plastisols as in the conventional production process.

Because of reduced capital investment this process allows also on site in - line production of plastisol at the end user, for example at the automotive assembly line.

## Claims

1. A method for producing plastisol compositions, the method comprising the steps of
(a) delivering into a blender a metered amount of polymer powder(s), filler(s), other constituents in powder form and liquid constituents,
(b) blending the mixture at low shear,
(c) recirculating said mixture with a pump through a dynamic mixer back into the blending tank,
(d) optionally degassing the plastisol composition,
(e) discharging the composition into storage containers.

2. The method of claim 1 comprising a filtration step between steps (d) and (e).

3. The method of claim 1 **characterized in that** the blending device for step b) is a stirred tank.

4. The method of claim 3 wherein the blending means are selected from an anchor stirrer, a propeller, an impeller, a beam agitator or combinations thereof.

5. The method according to any of the preceding claims wherein the dynamic mixer of step c) provides for successive alternating radial flow and linear flow of the composition.

6. The method according to any of the preceding claims **characterized in that** the dynamic mixer comprises turbines as dynamic mixing device.

7. The method according to claim 5 wherein the dynamic mixer comprises three turbines separated by two drilled plates.

8. The method according to claims 5 to 7 wherein the dynamic mixer is equipped with cooling means of sufficient capacity to prevent a temperature rise of the composition of more than 10°C.

9. The method according to any of the preceding claims wherein the composition is recirculated through the dynamic mixer for at least 2 to 4 times prior to discharging.

10. An apparatus for making uncured plastisol compositions comprising:
(a) A blending tank (1) equipped with low shear mixing means (2) and metering means for charging powdery and liquid components of the plastisol composition to said tank,
(b) pumping means (3) operatively connected to said blending tank (1),
(c) a dynamic mixer (4),
(d) a manifold (6) and
(e) backflow means (5) to blending tank (1) for recirculating the composition from blending tank (1) through dynamic mixer (4) back into blending tank (1)
(f) product discharge means (7) and
(g) optionally a filtration device.

11. An apparatus according to claim 10 wherein the dynamic mixer (4) comprises means for successive alternating radial flow and linear flow of the composition.

12. An apparatus according to claim 11 wherein the means for radial flow are turbines and the means for radial flow are drilled plates separating the turbines.

13. An apparatus according to claim 11 or 12 wherein the dynamic mixer comprises means for effective cooling of the mixing chambers.
